# EUROPÄISCHE PATENTSCHRIFT

(11) **EP 2 120 658 B1**
(45) Veröffentlichungstag und Bekanntmachung des Hinweises auf die Patenterteilung: **03.08.2011**
(21) Anmeldenummer: 08708680.7
(22) Anmeldetag: 05.02.2008
(51) Int. Cl.: A47J 42/50

(54) **ABNEHMBARER BOHNENBEHÄLTER MIT DREHVERSCHLUSS**
DETACHABLE BEAN CONTAINER COMPRISING A SWIVEL CLOSURE
RÉSERVOIR À GRAINS AMOVIBLE POURVU D'UN SYSTÈME DE FERMETURE PAR ROTATION

(30) Priorität: 23.02.2007 DE 102007008900
(43) Veröffentlichungstag der Anmeldung: 25.11.2009
(73) Patentinhaber: BSH Bosch und Siemens Hausgeräte GmbH, 81739 München (DE)
(72) Erfinder: KRAMER, Siegmund, 83417 Kirchanschöring (DE); MAGG, Johann, 83368 St. Georgen (DE)
(86) Internationale Anmeldenummer: PCT/EP2008/051379
(87) Internationale Veröffentlichungsnummer: WO 2008/101800

(56) Entgegenhaltungen:
- DE-C- 456 025
- DE-C- 594 983
- US-A- 1 725 942
- US-A- 5 845 857
- US-B1- 6 339 985

## Beschreibung

Die Erfindung betrifft einen Bohnenbehälter für einen Getränkeautomaten mit einem Behältnis zur Aufbewahrung von Bohnen, mit einer Abgabeöffnung für die Zufuhr der Bohnen in ein Mahlwerk und mit einer Verschlusseinrichtung, die zumindest ein bewegliches Verschlusselement zum Öffnen und Verschließen der Abgabeöffnung aufweist. Bei dem Bohnenbehälter kann es sich zum Beispiel um einen Kaffeebohnenbehälter für einen Kaffeeautomaten handeln.

Aus der DE 203 00 928 U1 ist ein Bohnenbehälter für einen Kaffeeautomaten bekannt. Zum Verschließen eines Ausgabeschachtes weist er eine Verschlusseinheit mit einem Verschlusselement auf, das um eine parallel zur Achse des Ausgabeschachtes angeordnete Schwenkachse zwischen seinen Endstellungen schwenkbar gelagert ist. Die Verschlusseinheit verfügt über einen mechanischen Antrieb, durch den das Verschlusselement an eine Drehbewegung des Behältnisses gekoppelt, von einer Offenstellung in eine Schließstellung oder umgekehrt verschwenkt werden kann. Das Verschlusselement wird bei einer Abnahme des Kaffeebohnenbehälters vom Kaffeeautomaten zwangsläufig in seine Schließstellung gebracht. Aus der US 5,845,857 ist eine für ein kontrolliertes Mischen zweier Bohnensorten geeignete Kaffeemühle bekannt, die ein Behältnis umfasst, das mittig in zwei Kammern aufgeteilt ist, und eine Auslassöffnung im Behälterboden aufweist. Die Auslassöffnung ist von einem Zylinder mit einer seitlichen Öffnung umgeben, wobei die Öffnung in jede der beiden Kammern führt. Mittels einer zylindrischen Abdeckung, kann die Öffnung mehr oder weniger weit geöffnet oder geschlossen werden, so dass ein bestimmtes Verhältnis an den verschiedenen Bohnensorten durch die Auslassöffnung in Richtung Mahlwerk tritt.

Der Erfindung liegt die Aufgabe zugrunde, einen derartigen Bohnenbehälter mit einer Verschlussvorrichtung anzugeben, die unabhängig von dessen Montage oder Demontage am Getränkeautomaten betätigt werden kann.

Diese Aufgabe wird erfindungsgemäß dadurch gelöst, dass das Verschlusselement eine Anzahl von radial zur Achse angeordneten Segmenten aufweist, die spiralförmig um eine Welle angeordnet und an ihrem Außenumfang jeweils in einer gewindeartigen Führung geführt sind. Das Verschlusselement kann zwischen zwei Endstellungen hin und her gedreht werden. Bei den Endstellungen handelt es sich zum einen um eine Schließstellung, in der das Verschlusselement die Abgabeöffnung verschließt, und zum anderen um eine Offenstellung, in der es die Abgabeöffnung für den Durchtritt von Bohnen öffnet. Seine Bewegung ist dabei nicht wie im Stand der Technik an die Bewegung des Behältnisses zur Montage bzw. Demontage des Bohnenbehälters am Getränkeautomat gekoppelt. Die Abgabeöffnung lässt sich somit auch unabhängig von der Montage bzw. Demontage des Bohnenbehälters am Kaffeeautomaten öffnen und schließen. Damit kann die Abgabeöffnung bereits vor der Abnahme des Bohnenbehälters vollständig verschlossen werden, und dieser Zustand bleibt auch während dieses Vorgangs erhalten.

Damit die Bewegung des Verschlusselements im Bereich der Abgabeöffnung in definierten Richtungen folgt, die für eine Wiederholgenauigkeit von Bedeutung sind, ist das Verschlusselement im Bereich der Abgabeöffnung geführt. Nach einer vorteilhaften Ausgestaltung der Erfindung ist das Verschlusselement an seinem unteren Ende einer entlang der Achse an dem Behältnis gelagerten Welle befestigt. Die Welle ist dabei im Bereich der Abgabeöffnung vorzugsweise mittig in der Abgabeöffnung in einer Führung gelagert. Das verleiht dem Verschlusselement die erforderliche Lagestabilität bei dessen Bewegung zwischen der Offen- und der Schließstellung. Die Welle überträgt außerdem die Bewegungsenergie auf das mit ihr verbundene Verschlusselement.

Bei einer weiteren vorteilhaften Ausgestaltung der Erfindung weist die Welle an ihrem oberen Ende ein Betätigungselement für das Verschlusselement auf. Dabei kann es sich zum Beispiel um einen Drehknopf handeln, mit dem ein Bediener des Getränkeautomaten per Hand die erforderliche Drehbewegung zwischen der Offen- und der Schließstellung auf die Welle und damit auf das Verschlusselement übertragen kann. Der Drehknopf kann zum Beispiel aus gestalterischen Gründen innerhalb des Behälters liegen. Er ist aber vorzugsweise außerhalb des Behälters angeordnet, um dem Bediener einen guten Zugriff zu ermöglichen.

Nach einer weiteren vorteilhaften Ausgestaltung der Erfindung ist das Betätigungselement im oberen Bereich des Behältnisses angeordnet. In diesem Bereich befindet sich üblicherweise auch eine Befüllöffnung des Behältnisses, die ohnehin für einen Bediener leicht zugänglich ist. Damit ist auch das Betätigungselement für den Bediener gut erreichbar und komfortabel zu betätigen.

Bei einer weiteren vorteilhaften Ausführungsform der Erfindung ist die Welle mit ihrem unteren Ende in einer in oder an der Abgabeöffnung angeordneten Führung gelagert. Die Führung kann beispielsweise zentral in der Abgabeöffnung oder an deren Umfang angeordnet sein. Sie definiert die Lage der Welle im Behältnis und die Lage des Verschlusselements in der Abgabeöffnung. Sie gewährleistet eine leichte Drehbarkeit der Welle und verhindert zugleich deren Verkanten bei deren Bewegung. Außerdem gibt die Führung die Lage des Verschlusselements gegenüber dem Behältnis vor, wodurch eine Kollision des Verschlusselements mit dem Behältnis beim Öffnen und Schließen der Abgabeöffnung vermieden wird.

Das obere Ende der Welle kann ebenfalls in einer Führung gelagert sein. Eine zweiseitige Führung hat den Vorteil, dass damit die Kräfte in den Lagerstellen geringer sind, wodurch sich die Welle noch leichter bewegen lässt. Die Welle kann dazu im oberen Bereich des Behältnisses im Behältnis selbst geführt sein. Das Behältnis kann dazu im oberen Bereich beispielsweise eine Hülse aufweisen, die an das Behältnis zum Beispiel über trägerähnliche Strukturen angeformt ist.

Bei einer vorteilhaften Ausgestaltung der Erfindung ist die Welle mit ihrem oberen Ende in, neben oder unter einem Deckel des Behältnisses gelagert. Gewöhnlich ist die Befüllöffnung im oberen Bereich des Behältnisses mit einem Deckel verschließbar. Er kann zum Beispiel mehrteilig ausgebildet sein. Dabei kann ein feststehender Teil als Führung für die Welle und ein beweglicher Teil zum Öffnen und Schließen der Einfüllöffnung dienen. Das Betätigungselement kann bei dieser Ausführungsform oberhalb des feststehenden Deckels angeordnet sein. Das hat den Vorteil, dass der bewegliche Teil des Deckels zum Befüllen des Behältnisses geöffnet werden kann, ohne dass das Betätigungselement dabei behindert.

Eine Anordnung der Wellenlagerung neben dem bzw. außerhalb des Deckel(s) hat den Vorteil, dass die Funktion des Deckels völlig unabhängig von der Wellenlagerung bzw. dem Betätigungselement gewährleistet ist. Der Deckel kann einteilig und vollständig abnehmbar sein. Die Wellenlagerung samt Betätigungselement kann dann unter dem Deckel positioniert sein. Dadurch schützt der Deckel sowohl das Betätigungselement als auch die Wellenlagerung gegen äußere Einflüsse, zum Beispiel gegen Verschmutzung.

Erfindungsgemäß weist das Verschlusselement eine Anzahl von radial zur Achse angeordneten Segmenten auf. Die Segmente können dabei sektorförmig ausgebildet sein. Die konkrete Form der Segmente ist dabei grundsätzlich frei wählbar, solange die Abgabeöffnung in der Schließstellung von der Gesamtheit der Segmente dicht verschließbar ist. Mit der Aufteilung bzw. Unterteilung des Verschlusselements in einzelne Segmente lässt sich die zum Öffnen und Schließen notwendige Drehbewegung des Verschlusselements verringern bzw. verkürzen.

Die Segmente sind spiralförmig um die Achse bzw. die Welle herum angeordnet und an ihrem Außenumfang jeweils in einer gewindeartigen Führung geführt. Dabei kann es sich um ein Segment handeln, dass zum Beispiel in Form eines einzelnen Gewindegangs kreisbogensegmentförmig um die Achse bzw. Welle herum angeordnet ist. Die Außenkante des Segments ist dabei in einer Gewindenut einer oder mehrerer Führungen geführt.

Anstelle eines Segments können auch zwei oder mehr Segmente spiralförmig als Kreisbogensegmente um die Welle herum angeordnet sein. Dabei ist jedes Segment zumindest in einer Führung geführt. Die Führungen wirken bei der Drehbewegung wie eine feststehende Mutter, durch die sich die spiralförmigen Segmente schraubenartig hindurchschrauben lassen und dabei die Abgabeöffnung schließen oder öffnen. Die Schraubbewegung des Verschlusselements hat den Vorteil, dass die zum Schließen bzw. Öffnen benötigte Kraft insgesamt reduzierbar ist. Die Segmente sind an ihren beiden Enden miteinander verbunden, so dass keine Bohnen dazwischen hindurch rutschen können. Die Ausbildung des Gewindes nach Art eines Schneckengewindes hat weiterhin den Vorteil, dass die Bewegung des Verschlusselements in eine Richtung gehemmt ist. Diese Selbsthemmung des Gewindes stellt sicher, dass das einmal in die Offen- oder Schließstellung verdrehte Verschlusselement nicht durch Vibrationen während des Betriebes des Getränkeautomaten in seiner Lage verändert werden kann.

Zum Verschließen der Abgabeöffnung schraubt sich das Verschlusselement nach unten und verschließt dadurch die Abgabeöffnung wie ein Deckel. Beim Öffnen mit der Gegenbewegung gibt das Verschlusselement einen Spalt gegenüber dem Behältnis frei, durch den die Bohnen ins Mahlwerk rutschen können. Das Verschlusselement und die Welle vollführen während des Öffnens bzw. Schließens neben der Drehbewegung auch eine lineare vertikale Bewegung in Achsrichtung. Dieser Hub ist durch die beiden Endstellungen des Verschlusselements, seiner Schließ- bzw. Offenstellung, begrenzt. Der Hub verursacht eine entsprechende axiale Bewegung des Betätigungselements.

Nach einer weiteren vorteilhaften Ausgestaltung der Erfindung weist die Welle und/oder das Verschlusselement und/oder das Betätigungselement Mittel zum Hubausgleich für das Betätigungselement während seiner Betätigung auf. Als Mittel kommen zum Beispiel zwei koaxial ineinander geführte Hülsen mit einem unrunden Querschnitt in Betracht, die sich während der Bewegung des Verschlusselements teleskopartig ineinander verschieben lassen. Dadurch wird ein Anheben des Betätigungselements beim Öffnen der Abgabeöffnung vermieden. Alternativ kann auch das Verschlusselement oder das Betätigungselement auf der Welle verschiebbar, aber drehfest gelagert sein. Das lässt sich zum Beispiel durch eine Nut-Feder-Verbindung zwischen Welle und Verschlusselement bzw. Betätigungselement realisieren. Der Vorteil des Hubausgleichs ist die Elimination der Bewegung des Betätigungselements in Achsrichtung. Die Bedienung des Drehknopfes wird komfortabler und die Optik des Behälters nicht gestört.

Bei einer nicht erfindungsgemäßen Ausgestaltung sind in der Abgabeöffnung abwechselnd eine Anzahl von feststehenden Segmenten und Öffnungen in einer Ebene parallel und eng benachbart zu den beweglichen Segmenten des Verschlusselements angeordnet. Bei dieser Ausführungsform stehen die beweglichen Segmente wie Propellerflügel radial von der Welle nach außen ab, wobei sich zwischen den Flügeln Leerräume befinden. Die feststehenden Segmente können vorteilhaft Teil des Behältnisses sein. Die zwischen den feststehenden Segmenten bestehenden Öffnungen bilden den für die Abgabe der Bohnen nutzbaren Teil der Abgabeöffnung.

Günstigerweise stimmen die Form und Anzahl der feststehenden Segmente und der dazwischen angeordneten Öffnungen jeweils mit der Anzahl und der Form der beweglichen Segmente des Verschlusselements überein. Zum Verschließen der Abgabeöffnung wird das Verschlusselement gedreht und die beweglichen Segmente des Verschlusselements verschließen die zwischen den feststehenden Segmenten angeordneten Öffnungen. Da die Form der beweglichen Segmente des Verschlusselements sowohl mit den feststehenden Segmenten als auch mit den dazwischen angeordneten Öffnungen übereinstimmt, ist die Abgabeöffnung in der Schließstellung vollständig und dicht geschlossen. Kommen die beweglichen und die feststehenden Segmente dagegen zur Deckung, fluchten auch die Leerstellen mit den Öffnungen und bilden die Offenstellung der Abgabeöffnung.

Überdecken die feststehenden Segmente die beweglichen Segmente des Verschlusselements bei geöffneter Abgabeöffnung, schützen die feststehenden Segmente die beweglichen in der Offenstellung, so dass diese nicht von den herausrutschenden Bohnen beschädigt bzw. verschlossen werden können. Da die beweglichen Segmente vollständig hinter bzw. unter den als Abdeckung dienenden feststehenden Segmenten verschwinden, behindern sie auch die Bohnen beim Verlassen des Behältnisses nicht.

Bei einer weiteren nicht erfindungsgemäßen Ausgestaltung weisen die feststehenden Segmente eine schirmartige Form auf. Darunter sind Formen zu verstehen wie zum Beispiel eine Halbkugel, Kegel, Kalotte oder bei viereckiger Grundfläche eine Pyramidenform. Die Bohnen gleiten dadurch in der Offenstellung an der Mantelfläche der feststehenden Segmente ab. Das hat den Vorteil, dass auf den Segmenten keine Bohnen bzw. Bohnenreste verbleiben und eine vollständige Entleerung des Behälters möglich ist.

Im Folgenden werden Ausführungsformen der vorliegenden Erfindung anhand von Figuren beispielhaft näher erläutert. Dabei zeigen:
- Figur 1: eine erste Ausführungsform eines Bohnenbehälters mit geöffneter Abgabeöffnung in perspektivischer Ansicht,
- Figur 2: den in Figur 1 dargestellten Bohnenbehälter mit geschlossener Abgabeöffnung in perspektivischer Ansicht,
- Figur 3: den in Figur 2 gezeigten Bohnenbehälter in einer Schnittdarstellung,
- Figur 4: eine nicht erfindungsgemäße Ausführungsform eines Bohnenbehälters mit geöffneter Abgabeöffnung in perspektivischer Ansicht,
- Figur 5: den in Figur 4 dargestellten Bohnenbehälter mit geschlossener Abgabeöffnung,
- Figur 6: den in Figur 5 dargestellten Bohnenbehälter in einer Schnittdarstellung,
- Figur 7: eine dritte nicht erfindungsgemäße Ausführungsform eines Bohnenbehälters mit geöffneter Abgabeöffnung in perspektivischer Ansicht,
- Figur 8: den in Figur 7 gezeigten Bohnenbehälter mit geschlossener Abgabeöffnung,
- Figur 9: den in Figur 8 dargestellten Bohnenbehälter in einer Schnittdarstellung.

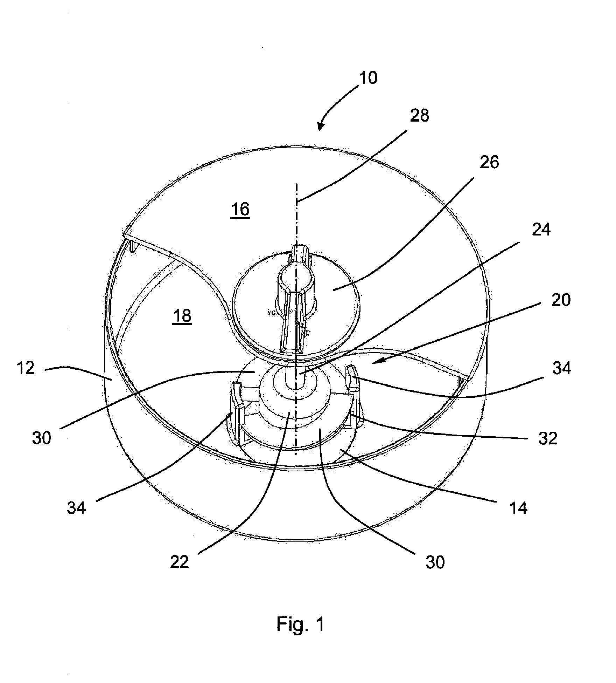

Figur 1 zeigt einen Bohnenbehälter 10 mit einem im Wesentlichen hohlzylinderförmigen Behältnis 12, das sich nach unten zu einer Abgabeöffnung 14 hin trichterförmig verjüngt. Das in seinem oberen Bereich offene Behältnis 12 wird dort von einem Deckel 16 zum Teil verschlossen. Der nicht vom Deckel 16 überdeckte obere Bereich des Behältnisses 12 bildet eine Einfüllöffnung 18 für Bohnen.

Oberhalb der Abgabeöffnung 14 erstreckt sich eine Verschlusseinrichtung 20 mittig in den Innenraum des Behältnisses 12 hinein. Sie besteht aus einem Verschlusselement 22, einer Welle 24 und einem Drehknopf 26 als Betätigungselement, die alle auf der Symmetrieachse 28 des Behältnisses 12 angeordnet sind. Das Verschlusselement 22 kann undrehbar, aber axial gleitend mit der Welle 24 verbunden sein oder eine solche Verbindung besteht zwischen dem Drehknopf 26 und der Welle 24, auf der dabei das Verschlusselement 22 befestigt ist. Das Verschlusselement 22 weist an seinem Umfang zwei spiralförmig angeordnete Segmente 30 auf. Sie werden jeweils in einer gewindeartigen Nut 32 einer Führung 34 geführt. Die beiden Führungen 34 sind gegenüberliegend am äußeren Rand der Abgabeöffnung 14 angeordnet und fest mit dem Behältnis 12 verbunden. Sie bedingen die Hubbewegungen des Verschlusselements 22. Figur 1 zeigt die Verschlusseinrichtung 20 in ihrer Offenstellung, in der das Verschlusselement 22 von der Abgabeöffnung 14 abgehoben ist. Dabei bildet sich zwischen ihm und dem Behältnis 12 ein Spalt aus, der so groß ist, dass die im Behältnis 12 befindlichen Bohnen hindurch passen und das Behältnis in Richtung eines Mahlwerks eines Getränkeautomaten verlassen können.

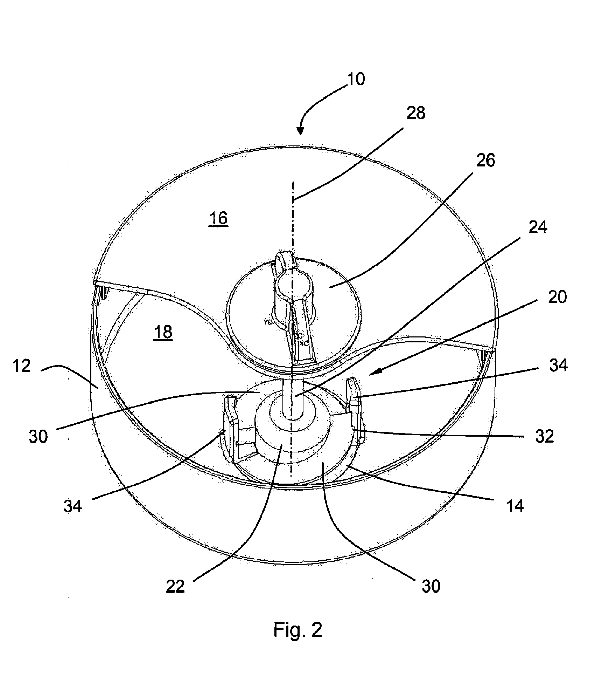

Damit das Behältnis 12 auch gefüllt vom Mahlwerk bzw. dem Getränkeautomaten abgenommen werden kann, muss die Abgabeöffnung 14 verschlossen werden. Dazu wird das Verschlusselement 22 im Uhrzeigersinn in seine Schließstellung (Figur 2) verdreht. Die Drehbewegung erzeugt ein Bediener des Getränkeautomaten am Drehknopf 26. Durch die Verdrehung des Verschlusselements 22 wird der Spalt zwischen den Segmenten 30 und dem Behältnis 12 zumindest derart verkleinert, dass die Abgabe von Bohnen durch die Abgabeöffnung 14 wirksam verhindert wird. Das Behältnis 12 kann vom Getränkeautomaten abgenommen werden, ohne dass Bohnen herausfallen.

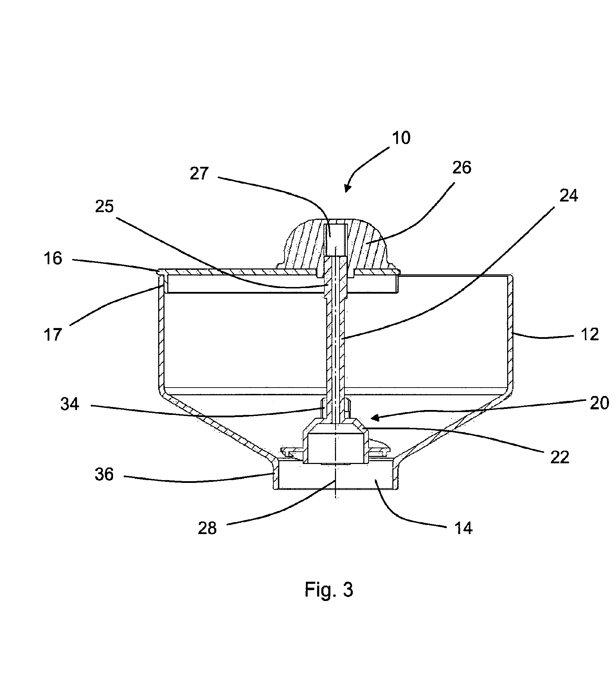

In Figur 3 ist der in Figur 2 dargestellte Bohnenbehälter 10 entlang einer Symmetrieachse 28 geschnitten dargestellt. In dieser Darstellung ist zu erkennen, wie sich das Behältnis 12 im unteren Bereich bis zur Abgabeöffnung 14 hin trichterförmig verjüngt. Um die Abgabeöffnung 14 herum weist das Behältnis 12 einen ringförmigen Kragen 36 auf, mit dem der Bohnenbehälter 10 auf das Mahlwerk des Getränkeautomaten aufgesteckt werden kann.

Der Deckel 16 weist einen nach unten abstehenden Kragen 17 auf, der in das Behältnis 12 hineinragt und innen an dessen oberen Rand anliegt. Damit ist die Lage des Deckels 16 fixiert. Er bildet eine Lagerstelle für die Welle 24 bzw. den Drehknopf 26, deren Funktion nur bei ortsfester Lage gewährleistet ist.

Damit der Drehknopf 26 während der Betätigung des Verschlusselements 22 nicht in Richtung der Achse 28 über den Deckel 16 angehoben wird, ist die Welle 24 im Drehknopf 26 axial verschiebbar, aber drehfest gelagert. Dazu weist der Drehknopf 26 einen Köcher 27 mit quadratischem Querschnitt auf, in dem ein entsprechend geformter Abschnitt 25 der Welle 24 eingreift. Er ermöglicht einen vertikalen Hub der Welle 24 bei einem Öffnungs- und Schließvorgang. Das Verschlusselement 22 und die Welle 24 bzw. die Welle 24 und der Drehknopf 26 sind einstückig ausgebildet. Damit weist die Verschlusseinrichtung 20 insgesamt weniger Einzelteile auf und ist kostengünstiger herstellbar.

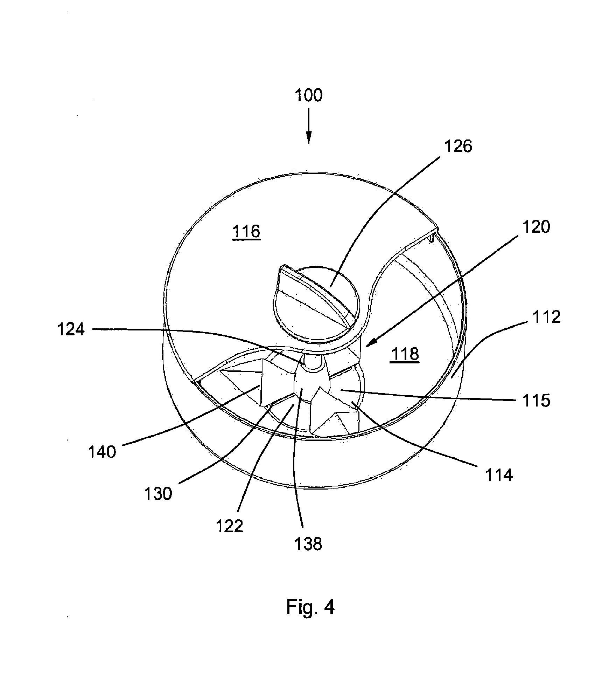

Figur 4 zeigt eine nicht erfindungsgemäße Ausführungsform eines Bohnenbehälters 100, der im Gegensatz zu dem in den Figuren 1 bis 3 dargestellten Bohnenbehälter 10 eine andere Verschlusseinrichtung 120 aufweist. Er besteht aus einem Behältnis 112, dessen Form, Abgabeöffnung 114, Einfüllöffnung 118 und Deckel 116 mit denen des Behältnisses 12 des Bohnenbehälters 10 der Figuren 1 bis 3 im Wesentlichen übereinstimmt.

Bei dieser Ausführungsform ist eine Welle 124 im Bereich der Abgabeöffnung 114 in einer hülsenförmigen Führung 138 drehbar gelagert. Sie wird mittig in der Abgabeöffnung 114 von drei sternförmig dazu angeordneten Halteelementen 140 fixiert, die drei Zwischenräume 115 einschließen. Die drei Zwischenräume 115 bilden zusammen die Abgabeöffnung 114. Die in den Innenraum des Behältnisses 112 weisende Oberfläche der Halteelemente 140 ist pyramidenförmig ausgebildet, so dass keine Bohnen darauf liegen bleiben können. Sie dienen in der gezeigten Offenstellung zur Abdeckung von drei Segmenten 130 des Verschlusselements 122.

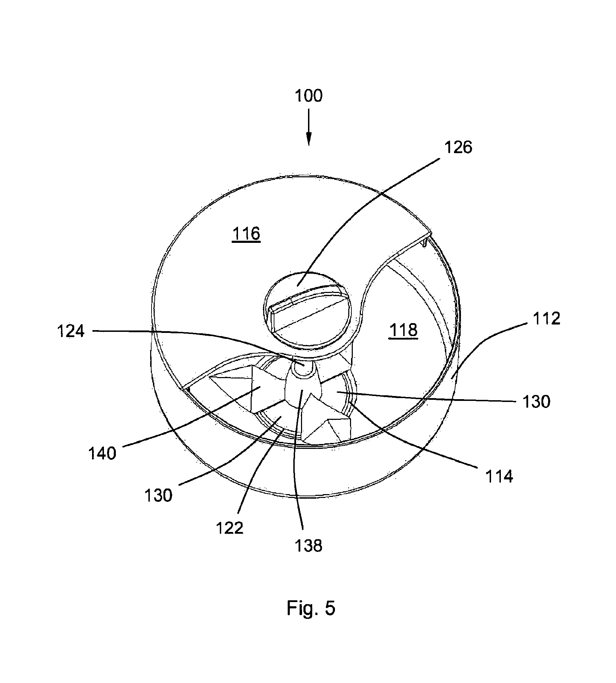

Figur 5 stellt den Bohnenbehälter 100 mit geschlossener Abgabeöffnung 114 dar. Dabei füllen die drei radial von der Welle 124 flügelartig abstehenden Verschlusselemente 122 die Zwischenräume 115 zwischen den Halteelementen 140 und verschließen so die Abgabeöffnung 114. Die Verschlusselemente 122 sind dabei in einer Ebene unterhalb der Halteelemente 140 angeordnet.

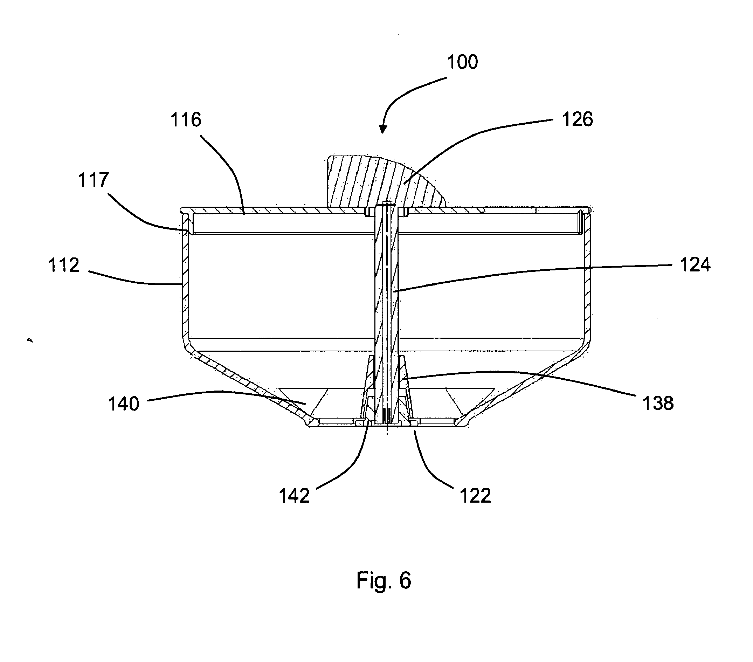

Figur 6 zeigt den Bohnenbehälter 100 geschnitten entlang der Achse der Welle 124. Die Welle 124 und der Drehknopf 126 sind einteilig ausgebildet und drehbar im Deckel 116 gelagert. Im unteren Bereich ist die Welle 124 in der Führung 138 drehbar gelagert. Die drei Segmente 130 des Verschlusselements 122 sind durch einen gemeinsamen Haltering 142 miteinander verbunden. Er ist auf das untere Ende der Welle 124 aufgeschoben und durch eine Rastverbindung drehfest mit ihr verbunden.

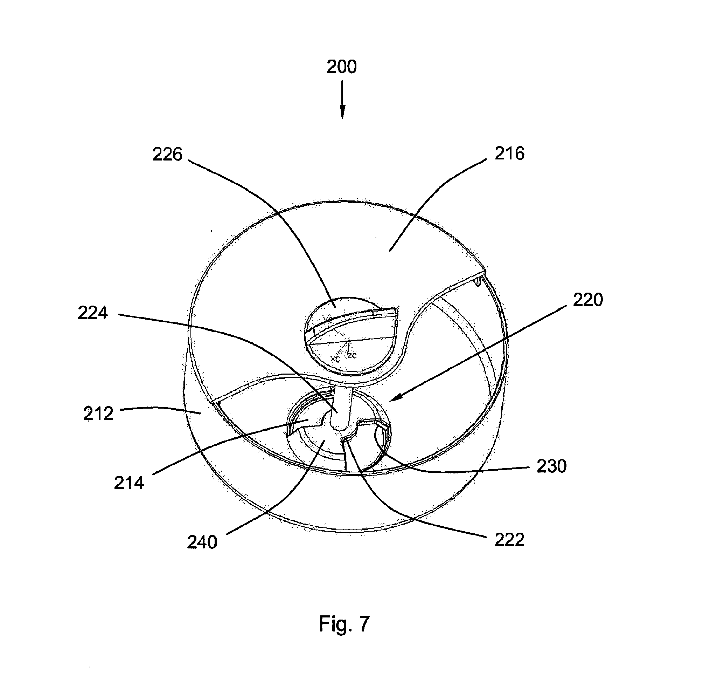

In den Figuren 7 bis 9 ist eine weitere nicht erfindungsgemäße Ausführungsform eines Bohnenbehälters 200 dargestellt. Deren etwas vereinfachte Verschlusseinrichtung 220 besteht ebenfalls aus einem Verschlusselement 222, einer Welle 224 und einem Drehknopf 226. Das Verschlusselement 222 wird nur aus zwei einander gegenüberliegenden und radial von der Welle 224 abstehenden Segmenten 230 gebildet. Sie werden in der in Figur 7 dargestellten Offenstellung von einem Halteelement 240 abgedeckt. Die Form des Verschlusselements 222 stimmt im Wesentlichen mit der Form des Halteelements 240 überein. Das Halteelement 240 ist Teil des Behältnisses 212 und dient auch zur drehbaren Lagerung des unteren Abschnitts der Welle 224. Deren oberer Bereich ist im Deckel 216 gelagert.

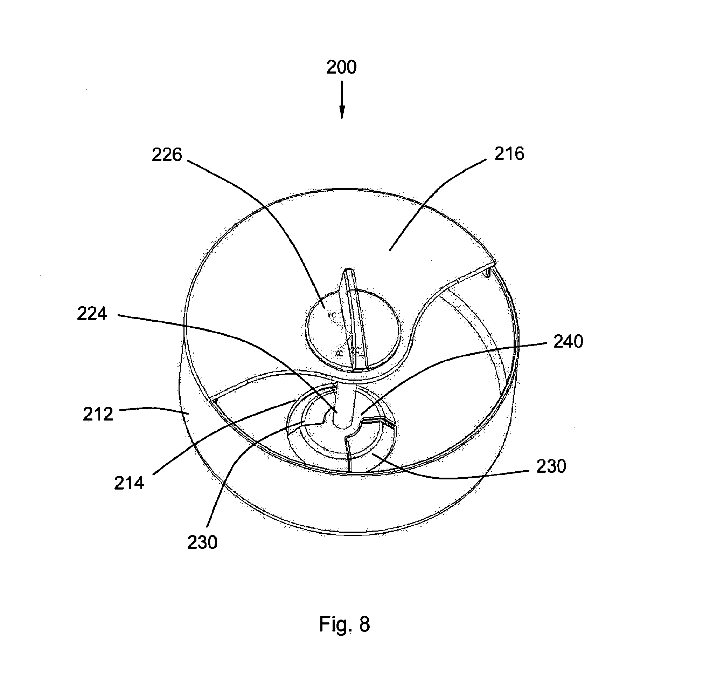

Figur 8 zeigt den in Figur 7 dargestellten Bohnenbehälter 200 mit geschlossener Abgabeöffnung 114. Die beiden Segmente 230 wurden um 90 Grad unter dem Halteelement 240 hervorgedreht und schließen so die Abgabeöffnung 114. Sie wird durch zwei Öffnungen gebildet, die sich zwischen dem Halteelement 240 und dem Behältnis 212 erstrecken.

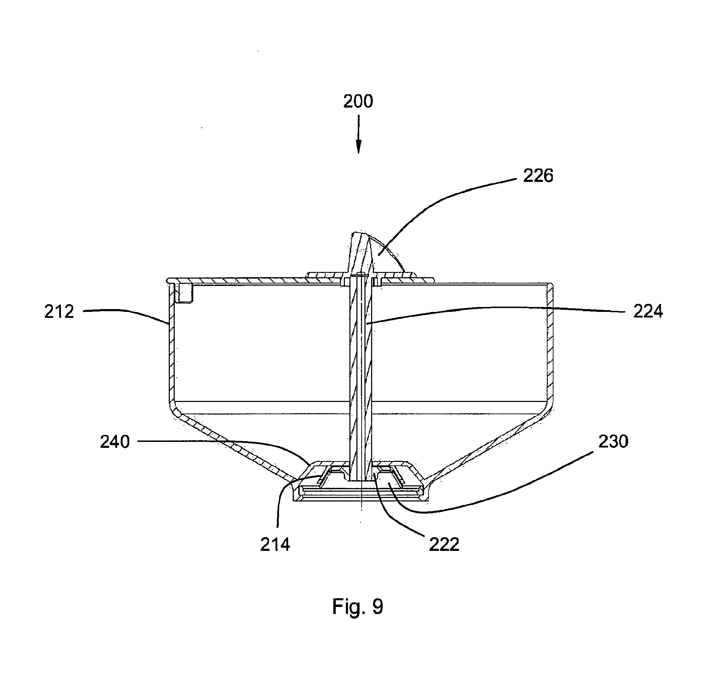

In Figur 9 ist der in Figur 8 dargestellte Bohnenbehälter 200 entlang der Achse der Welle 224 geschnitten dargestellt. Auch hier sind der Drehknopf 226 und die Welle 224 einstückig ausgebildet. Das Verschlusselement 222 ist auf die Welle 224 von unten aufgesteckt und drehfest mit ihr verbunden. Die beiden Segmente 230, die unterhalb des Halteelements 240 angeordnet sind, verschließen dabei die Abgabeöffnung 214.

Da es sich bei der vorhergehenden, detailliert beschriebenen Verschtusseinrichtungem 20 um ein Ausführungsbeispiele handelt, kann sie in üblicher Weise vom Fachmann in einem weiten Umfang modifiziert werden, ohne den Bereich der Erfindung zu verlassen. Insbesondere kann auch die konkreten Ausgestaltungen der Verschlusselemente 22 in anderer Form als in der hier beschriebenen erfolgen. Ebenso kann der Drehknopf 26 in einer anderen Form ausgestaltet oder an einer anderen Stelle angeordnet werden, wenn dies aus Platzgründen bzw. designerischen Gründen notwendig ist.

### Bezugszeichenliste:

- 10, 100, 200: Bohnenbehälter
- 12, 112,212: Behältnis
- 14,114,214: Abgabeöffnung
- 16, 116,216: Deckel
- 17, 117: Kragen
- 18, 118: Einfüllöffnung
- 20, 120, 220: Verschlusseinrichtung
- 22, 122, 222: Verschlusselement
- 24, 124, 224: Welle
- 25: Abschnitt
- 26, 126, 226: Drehknopf
- 27: Köcher
- 28: Symmetrieachse
- 30, 130, 230: Segment
- 32: Nut
- 34: Führung
- 36: Kragen
- 115: Zwischenräume
- 138: Führung
- 140, 240: Halteelement
- 142: Haltering

## Patentansprüche

1. Bohnenbehälter (10, 110, 210) für einen Getränkeautomaten, mit einem Behältnis (12, 112, 212) zur Aufbewahrung von Bohnen, mit einer Abgabeöffnung (14, 114, 214) für die Zufuhr der Bohnen in ein Mahlwerk und mit einer Verschlusseinrichtung (20, 120, 220), die zumindest ein bewegliches Verschlusselement (22, 122, 222) zum Verschließen der Abgabeöffnung (14, 114, 214) aufweist, wobei das Verschlusselement (22, 122, 222) gegenüber dem Behältnis (12, 112, 212) zum Schließen der Abgabeöffnung (14, 114, 214) um eine in Abgaberichtung verlaufende Achse (28) der Abgabeöffnung (14, 114, 214) drehbar ist, **dadurch gekennzeichnet, dass** das Verschlusselement (22, 122, 222) eine Anzahl von radial zur Achse angeordneten Segmenten (30, 230) aufweist, die spiralförmig um eine Welle (24) angeordnet und an ihrem Außenumfang jeweils in einer gewindeartigen Führung (34) geführt sind.

2. Behälter nach Anspruch 1, **dadurch gekennzeichnet, dass** das Verschlusselement (22, 122, 222) an dem unteren Ende der entlang der Achse (28) an dem Behältnis (12, 112, 212) gelagerten Welle (24, 124, 224) befestigt ist.

3. Behälter nach Anspruch 1 oder 2, **dadurch gekennzeichnet, dass** die Welle (24, 124, 224) an ihrem oberen Ende ein Betätigungselement (26, 126, 226) zur Betätigung des Verschlusselements (22,122, 222) aufweist.

4. Behälter nach Anspruch 3, **dadurch gekennzeichnet, dass** das Betätigungselement (26, 126, 226) in einem oberen Bereich des Behältnisses (12, 112, 212) angeordnet ist.

5. Behälter nach einem der Ansprüche 2 bis 4, **dadurch gekennzeichnet, dass** die Welle (24, 124, 224) mit ihrem unteren Ende in einer in oder an der Abgabeöffnung (14, 114, 214) angeordneten Führung (34, 138) gelagert ist.

6. Behälter nach einem der Ansprüche 2 bis 5, **dadurch gekennzeichnet, dass** die Welle (24, 124, 224) mit ihrem oberen Ende in, neben oder unter einem Deckel (16, 116, 216) des Behältnisses (12, 112, 212) gelagert ist.

7. Behälter nach Anspruch 6, **dadurch gekennzeichnet, dass** die Welle (24) und/oder das Verschlusselement (22) und/oder das Betätigungselement (26) Mittel (25, 27) zum Hubausgleich des Betätigungselements (26) während seiner Betätigung aufweisen.

## Claims

1. Bean container (10, 110, 210) for a drinks machine, with a receptacle (12, 112, 212) for storing beans, with a delivery opening (14, 114, 214) for the feed of beans to a mill and with a closure device (20, 120, 220), which comprises at least one movable closure element (22, 122, 222) for closing the delivery opening (14, 114, 214), wherein the closure element (22, 122, 222) is rotatable relative to the receptacle (12, 112, 212) about an axis (28), which extends in delivery direction, of the delivery opening (14, 114, 214) in order to close the delivery opening (14, 114, 214), **characterised in that** the closure element (22, 122, 212) comprises a plurality of segments (30, 230), which are arranged radially with respect to the axis and which are disposed spirally about a shaft (24) and each guided at the outer circumference thereof in a respective thread-like guide (34).

2. Container according to claim 1, **characterised in that** the closure element (22, 122, 222) is fastened to the lower end of the shaft (24, 124, 224) mounted along the axis (28) at the receptacle (12, 112, 212).

3. Container according to claim 1 or 2, **characterised in that** the shaft (24, 124, 224) has at its upper end an actuating element (26, 126, 226) for actuating the closure element (22, 122, 222).

4. Container according to claim 3, **characterised in that** the actuating element (26, 126, 226) is arranged in an upper region of the receptacle (12, 112, 212).

5. Container according to any one of claims 2 to 4, **characterised in that** the shaft (24, 124, 224) is mounted by its lower end in a guide (34, 138) arranged in or at the delivery opening (14, 114, 214).

6. Container according to any one of claims 2 to 5, **characterised in that** the shaft (24, 124, 224) is mounted by its upper end in, near or below a lid (16, 116, 216) of the receptacle (12, 112, 212).

7. Container according to claim 6, **characterised in that** the shaft (24) and/or the closure element (22) and/or the actuating element (26) comprises means (25, 27) for equalisation of the stroke of the actuating element (26) during actuation thereof.

## Revendications

1. Réservoir à grains (10, 110, 210) pour un distributeur de boissons, comprenant un récipient (12, 112, 212) pour la conservation de grains, comprenant une ouverture de décharge (14, 114, 214) pour l'amenée des grains dans un moulin et comprenant un dispositif de fermeture (20, 120, 220) qui présente au moins un élément de fermeture mobile (22, 122, 222) destiné à fermer l'ouverture de décharge (14, 114, 214), l'élément de fermeture (22, 122, 222) étant rotatif, par rapport au récipient (12, 112, 212), autour d'un axe (28), s'étendant en direction de décharge, de l'ouverture de décharge (14, 114, 214) pour fermer l'ouverture de décharge (14, 114, 214), **caractérisé en ce que** l'élément de fermeture (22, 122, 222) présente un nombre de segments (30, 230) disposés radialement par rapport à l'axe, lesquels sont disposés en forme de spirale autour d'un arbre (24) et sont respectivement guidés sur leur circonférence extérieure dans un guidage (34) semblable à un filetage.

2. Réservoir selon la revendication 1, **caractérisé en ce que** l'élément de fermeture (22, 122, 222) est fixé sur l'extrémité inférieure de l'arbre (24, 124, 224) logé sur le récipient (12,112,212) le long de l'axe (28).

3. Réservoir selon la revendication 1 ou 2, **caractérisé en ce que** l'arbre (24, 124, 224) présente sur son extrémité supérieure un élément de commande (26, 126, 226) destiné à commander l'élément de fermeture (22, 122, 222).

4. Réservoir selon la revendication 3, **caractérisé en ce que** l'élément de commande (26, 126, 226) est disposé dans une partie supérieure du récipient (12, 112, 212).

5. Réservoir selon l'une quelconque des revendications 2 à 4, **caractérisé en ce que** l'arbre (24, 124, 224) est logé avec son extrémité inférieure dans un guidage (34, 138) disposé dans ou sur l'ouverture de décharge (14, 114, 214).

6. Réservoir selon l'une quelconque des revendications 2 à 5, **caractérisé en ce que** l'arbre (24, 124, 224) est logé avec son extrémité supérieure dans, à côté ou sous un couvercle (16, 116, 216) du récipient (12, 112, 212).

7. Réservoir selon la revendication 6, **caractérisé en ce que** l'arbre (24) et/ou l'élément de fermeture (22) et/ou l'élément de commande (26) présentent des moyens (25, 27) pour la compensation de course de l'élément de commande (26) pendant sa commande.
